# EUROPÄISCHE PATENTSCHRIFT

(11) **EP 3 869 632 B1**
(45) Veröffentlichungstag und Bekanntmachung des Hinweises auf die Patenterteilung: **10.06.2026**
(21) Anmeldenummer: 21000028.7
(22) Anmeldetag: 29.01.2021
(51) Int. Cl.: H01R 13/6593, H01R 13/6591, H01R 11/12, H01R 11/28, B60L 53/16, B60L 53/18, H01R 9/05

(54) **LADEBUCHSE FÜR EIN ELEKTROFAHRZEUG**
CHARGING SOCKET FOR AN ELECTRIC VEHICLE
PRISE DE RECHARGE POUR UN VÉHICULE ÉLECTRIQUE

(30) Priorität: 20.02.2020 DE 102020104510
(43) Veröffentlichungstag der Anmeldung: 25.08.2021
(73) Patentinhaber: HARTING Automotive GmbH, 32339 Espelkamp (DE)
(72) Erfinder: Helfenbein, Irene, 32339 Espelkamp (DE); Bösch, Daniel, 32339 Espelkamp (DE); Beimdieck, Carsten, 32339 Espelkamp (DE)

(56) Entgegenhaltungen:
- CN-U- 209 434 514
- DE-A1- 102004 051 845
- DE-A1- 102008 006 340
- DE-A1- 102012 000 137
- US-A1- 2007 275 591

## Beschreibung

Die Erfindung geht aus von einer Ladebuchse für ein Elektrofahrzeug nach der Gattung des unabhängigen Anspruchs 1.

Derartige Ladebuchsen werden in Elektrofahrzeugen eingesetzt. In die Ladebuchsen werden Ladesteckverbinder zum Laden der im Elektrofahrzeug befindlichen Batterien eingesteckt.

### Stand der Technik

Die WO 2017/162651 A1 zeigt eine Ladebuchse für ein Elektrofahrzeug. Die Ladebuchse ist mit zwei Energieleitungen ausgestattet, über welche die notwendige Ladeenergie übertragbar ist.

Die CN 209 434 514 U zeigt eine Ladebuchse, bspw. für Elektrofahrzeuge. Die Ladebuchse weist ein Gehäuse auf, welches aus einem Basisteil und einer Rückwand mit Kabeldurchlässen besteht.

Die DE 10 2008 006 340 A1 zeigt eine Steckverbindungsanordnung mit einem Gerät, das eine leitfähige Gerätehülse aufweist, die eine Gerätesteckerbuchse bildet. Die Buchse verfügt über Erdungsleiter, an dessen Ende ein Klemmelement angecrimpt ist. Die Klemmenelemente werden einzeln am Gehäuse befestigt.

Die DE 10 2004 051 845 A1 zeigt eine Verbindungsstruktur für abgeschirmte Kabel. Hierbei wird ein geflochtenes Hohlkabel eines abgeschirmten Kabels zu Erdungszwecken mit einer Abschirmschale mittels eines Verbindungsanschlusses verbunden.

Die DE 10 2012 000 137 B4 zeigt ein elektrisches Kabel mit einem Innenleiter, einer den Innenleiter umschliessenden Primärisolation, einer die Primärisolation umschliessenden elektrischen Schirmung, einer die Schirmung umschliessenden Sekundärisolation, wobei an zumindest einem Ende des Kabels die Sekundärisolation entfernt ist, so dass die Schirmung abisoliert ist.

Die US 2007 0275 591 A1 zeigt einen Kabelverbinder mit einem Gehäuse und Aderendhülsen-Aufnahmestrukturen zur Aufnahme von Aderendhülsensystemen von mindestens zwei Kabeln.

Für einen optimalen Ladevorgang verfügen Ladebuchsen in der Regel auch über Signalkontakte, über die Steuersignale an eine entsprechende Ladeelektronik geschickt werden. Diese Steuersignale sind anfällig für elektromagnetische Störfelder, die beim Ladevorgang durch die Energieleitungen, bzw. den daran angeschlossenen Energiekontaktelementen, entstehen können. Hierdurch kann der Ladevorgang gestört werden.

### Aufgabenstellung

Die Aufgabe der Erfindung besteht darin, eine zuverlässige Ladebuchse für ein Elektrofahrzeug bereitzustellen.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Die erfindungsgemäße Ladebuchse ist für ein Elektrofahrzeug, insbesondere für einen elektrisch betriebenen PKW vorgesehen. Die Ladebuchse weist zumindest zwei elektrische Energieleitungen auf. Die Energieleitungen bestehen jeweils aus einer zentralen Leitung, über die hohe Ladeströme übertragen werden können. Üblicherweise bestehen die zentralen Leitungen aus zumindest einem metallischen Werkstoff. Die metallische Leitung weist in der Regel einen großen Querschnitt auf. Als großer Querschnitt ist in diesem Zusammenhang ein Aderquerschnitt von mehr als 10 mm² zu verstehen, insbesondere ein Aderquerschnitt von mehr als 15 mm², besonders vorteilhafter Weise wird ein Aderquerschnitt von mehr als xy mm² gewählt.

Auf der zentralen metallischen Leitung ist eine umlaufende erste Isolierung aufgebracht, die aus einem nichtleitenden Kunststoff (Kunststoffmantel) gebildet ist. Auf der ersten Isolierung ist ein metallisches Schirmgeflecht angeordnet. Das Schirmgeflecht dient zur elektromagnetischen Abschirmung der jeweiligen Energieleitung. Auf dem Schirmgeflecht ist eine umlaufende zweite Isolierung vorgesehen.

Die Ladebuchse weist eine metallische Kontaktbrille auf, die mit den (beiden) Schirmgeflechten der zumindest zwei Energieleitungen elektrisch leitend verbunden ist. Die Kontaktbrille weist zwei kreisrunde Anschlussbereiche auf, in denen die Energieleitungen verlaufen. Die Anschlussbereiche sind über einen spitz verlaufenden Steg verbunden.

Die Ladebuchse weist einen Anschraubdom auf, der mit der Kontaktbrille elektrisch leitend verbunden ist. Diese Verbindung findet an dem zuvor beschriebenen Steg statt. An dem Anschraubdom ist ein elektrischer Schirmleiter anschließbar, welcher zur Schirmanbindung an die Karosserie des Elektrofahrzeugs elektrisch leitend anschließbar ist.

Erfindungsgemäß ist auf dem jeweiligen Schirmgeflecht der elektrischen Energieleitungen eine metallische Hülse elektrisch leitend befestigt. Hierzu wird in der Regel die Crimptechnik verwendet. Diese Verbindungstechnik ist einfach realisierbar und gleichzeitig zuverlässig.

Erfindungsgemäß ist die Hülse mit einer umlaufenden Nut versehen, wobei in der umlaufenden Nut eine metallische Ringfeder angeordnet ist. Die elektrische Verbindung zwischen der Kontaktbrille und dem jeweiligen Schirmgeflecht der elektrischen Energieleitungen wird über die metallische Hülse und der darin angeordneten Ringfeder realisiert. Diese elektrische Kontaktierung hat sich als besonders zuverlässig erwiesen, weil hierdurch Toleranzen und mechanische Bewegungen der Kontaktelemente beim Steckvorgang ausgeglichen werden.

In einer bevorzugten Ausführungsform weist der Anschraubdom der Ladebuchse einen Ringkabelschuh zum Anschließen des Schirmleiters auf. Hierüber kann der Schirmleiter einfach und zuverlässig elektrisch leitend angeschlossen werden.

Vorteilhafterweise umschließt die Ladebuchse ein Gehäuse, welches die Kontaktbrille umfasst. Das Gehäuse besteht in der Regel aus Kunststoff. Die Kontaktbrille ist innerhalb des Gehäuses angeordnet. Durch das Gehäuse wird die Ladebuchse im eingebauten Zustand vor mechanischer Beschädigung und gegen ein Eindringen von Medien wie Wasser und Staub geschützt.

Bevorzugt wird das Gehäuse zweiteilig ausgeführt. Hierdurch wird die Konfektionierung der Ladebuchse erleichtert.

In einer bevorzugten Ausgestaltung der Erfindung ragt der Ringkabelschuh des Anschraubdoms aus dem Gehäuse heraus.

Hierdurch kann der Schirmleiter auch noch nach der Konfektionierung der Ladebuchse angeschlossen werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung zweier Energieleitungen,
- Fig. 2: eine perspektivische Darstellung der Energieleitungen, die über eine Kontaktbrille miteinander verbunden sind,

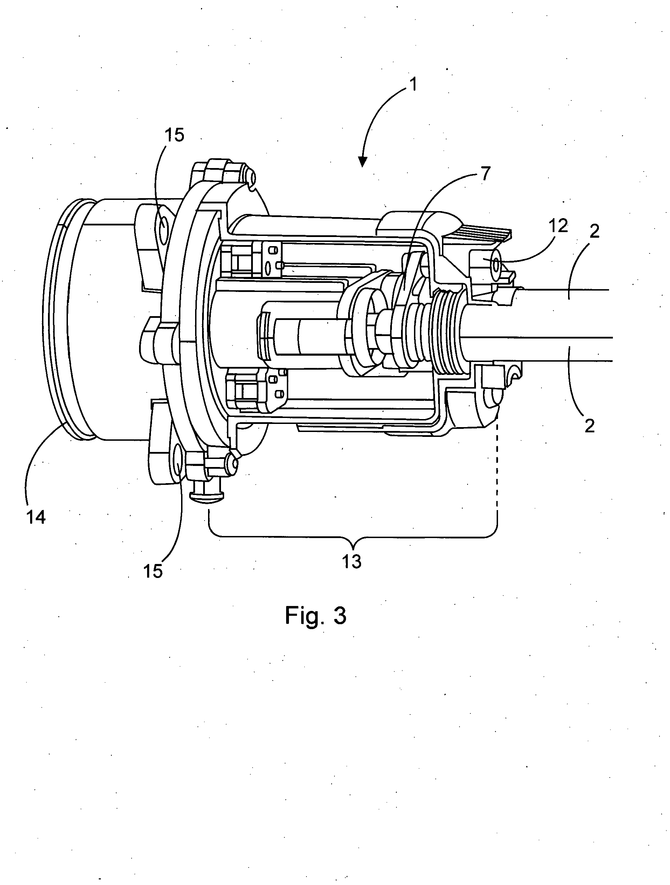

- Fig. 3: eine teilweise offene perspektivische Darstellung einer erfindungsgemäßen Ladebuchse,
- Fig. 4: eine geschlossene perspektivische Darstellung einer erfindungsgemäßen Ladebuchse,
- Fig. 5: eine perspektivische Darstellung von gebündelten Signalleitungen, die an die Ladebuchse angeschlossen sind,
- Fig. 6: eine weitere perspektivische Darstellung der gebündelten Signalleitungen, die an die Ladebuchse angeschlossen sind,
- Fig. 7: eine offene, perspektivische Darstellung der erfindungsgemäßen Ladebuchse und
- Fig. 8: eine perspektivische Darstellung der erfindungsgemäßen Ladebuchse.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten", "vorne" und "hinten" sind mit Bezug auf die jeweilige Figur zu verstehen und können in den einzelnen Figuren gegenüber dem dargestellten Objekt variieren.

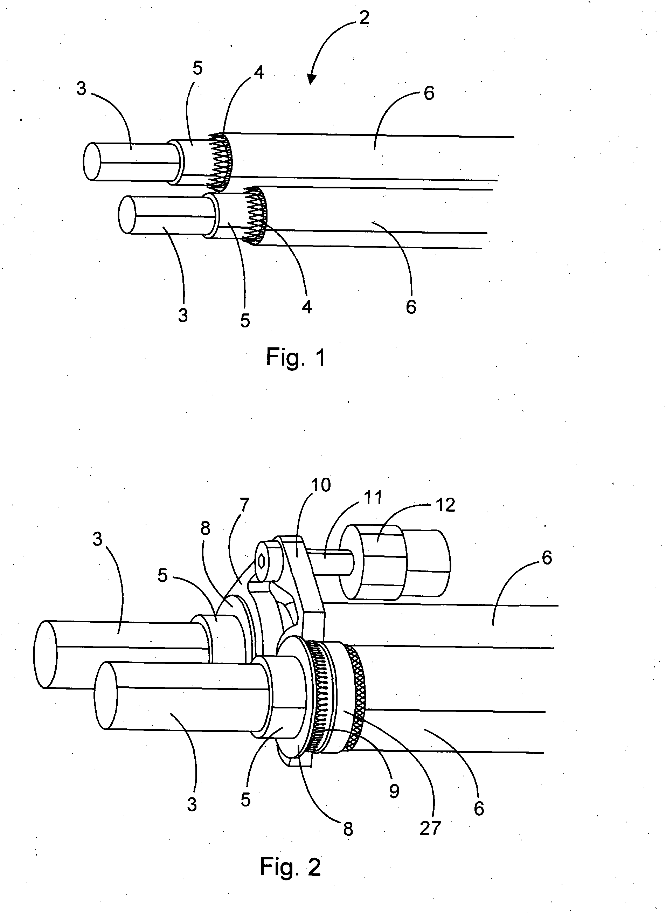

Die Figur 1 zeigt zwei elektrische Energieleitungen 2, die an die Ladebuchse 1 angeschlossen werden. Die jeweilige Energieleitung 2 besteht aus einer zentralen metallischen Leitung 3, die zur Übertragung hoher Ströme ausgelegt ist. Darüber ist eine umlaufende erste Isolierung 5 angeordnet. Auf der ersten Isolierung 5 befindet sich ein metallisches Schirmgeflecht 4. Um das Schirmgeflecht 4 herum ist eine zweite Isolierung 6 angeordnet.

Bei der Konfektionierung der Ladebuchse 1 werden die Energieleitungen 2 abisoliert bzw. vorbereitet, wie es in Figur 1 dargestellt ist. Im vorderen Teil sind die blanken metallischen Leitungen 3 dargestellt. Weiter hinten ist ein Teil der ersten Isolierung 5 zu sehen. Daran anschließend kommt das Schirmgeflecht 4 zum Vorschein, welches noch weiter hinten von der zweiten Isolierung 6 überdeckt ist.

Auf den jeweiligen Schirmgeflechten ist eine Hülse 8 mithilfe der Crimptechnik befestigt. Im hinteren Teil der Hülse 8 wird aus Stabilitätsgründen eine weitere Hülse 27 gecrimpt. Die Hülse 8 weist eine umlaufende Nut auf, in welcher eine Ringfeder 9 angeordnet ist. Auf die jeweilige Ringfeder 9 greift die jeweilige kreisrunde Ausnehmung der Kontaktbrille 7, wie in Figur 2 zu erkennen ist. Die Schirmgeflechte 4 der Energieleitungen 2 sind über die Kontaktbrille 7 elektrisch leitend kontaktiert. Über die Kontaktbrille 7 sind dann jeweils auch die Schirmgeflechte 4 elektrisch leitend miteinander kontaktiert.

Die Kontaktbrille 7 weist zwei kreisrunde Öffnungen auf, die die jeweiligen Energieleitungen 2 umfassen. Die kreisrunden Öffnungen sind über einen dreieckigen Steg 10 miteinander verbunden. Der Steg 10 weist eine Öffnung auf, in welcher ein Anschraubdom 11 angeordnet ist.

Der Anschraubdom 11 weist einen Ringkabelschuh 12 auf, über welchen ein elektrischer Schirmleiter (nicht gezeigt) anschließbar ist. Der Schirmleiter kann an die Karosserie des Elektrofahrzeugs angeschlossen und damit elektrisch leitend verbunden werden. Auf diese Weise wird ein sicherer Masseanschluss hergestellt, sodass der elektromagnetische Schirm stets aufrecht erhalten bleibt.

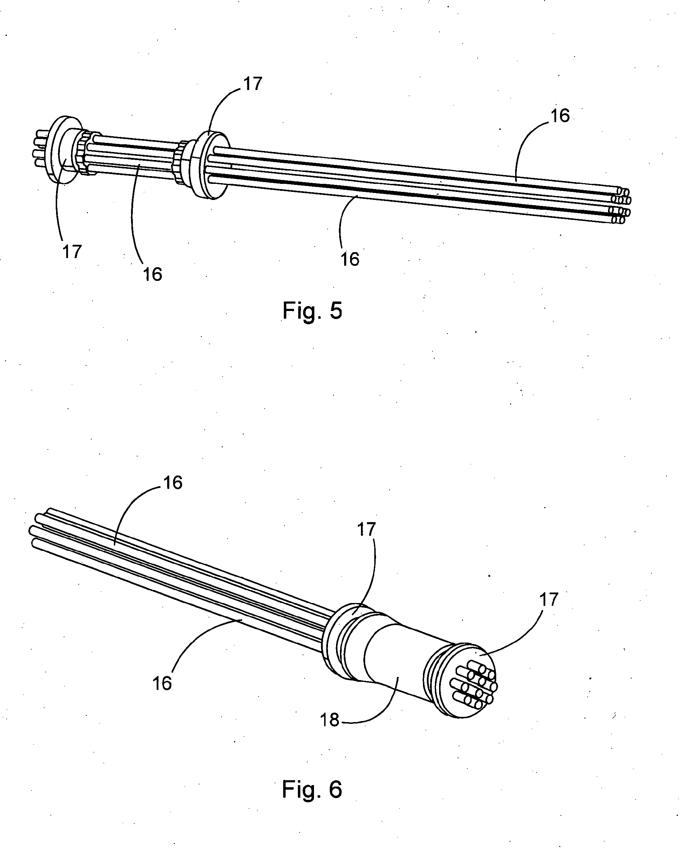

In den Figuren 5 und 6 sind die Signalleitungen 16 der Ladebuchse 1 .dargestellt, die in zwei voneinander beabstandeten und parallel zueinander ausgerichteten Kabelmanagern 17 angeordnet sind. Die Kabelmanager 17 weisen jeweils mehrere Durchführungsöffnungen auf, durch welche jeweils eine Signalleitung 16 verläuft. Die Signalleitungen 16 sind zwischen den Kabelmanagern 17 mit einer Umspritzung 18 versehen. Hierdurch können die Signalleitungen 16 bei der Konfektionierung der Ladebuchse 1 sehr einfach gehandhabt werden.

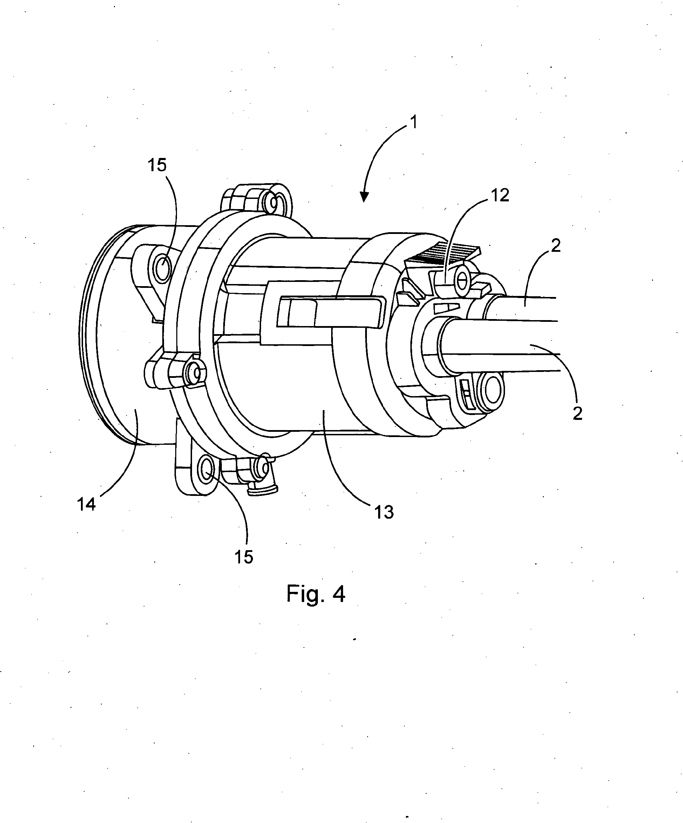

Das Gehäuse 13 der Ladebuchse 1 ist zweiteilig ausgeführt. Die beiden Gehäuseteile werden über einen Rastmechanismus verbunden, der in Figur 4 gut zu sehen ist. Im eingebauten Zustand ragt aus dem Elektrofahrzeug lediglich der Kontaktträger 14 der Ladebuchse 1 heraus. Anschlussseitig ragt der Kontaktträger 14 in das zweiteilige Gehäuse 13 der Ladebuchse 1 hinein. Der Kontaktträger 14 ist mit dem Gehäuse 13 verschraubt. Der Kontaktträger 14 weist Öffnungen 15 auf, über welche die Ladebuchse 1 an einem Elektrofahrzeug befestigt, beispielsweise verschraubt oder vernietet, werden kann.

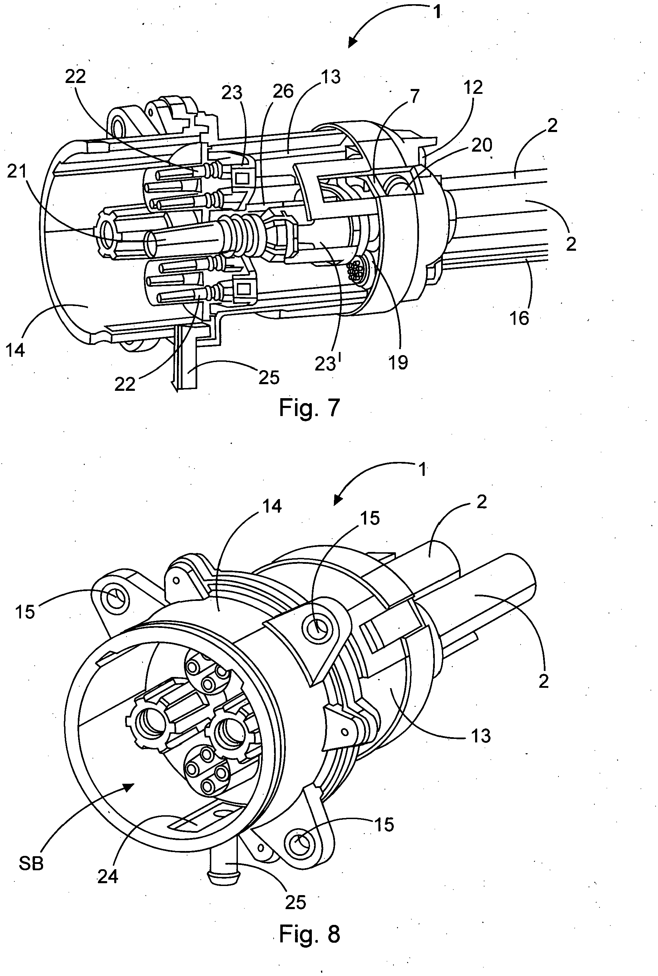

In Figur 7 ist eine offene Darstellung der Ladebuchse 1 zu sehen. Die über die Kabelmanager 17 und die Umspritzung 18 gebündelten Signalleitungen 16 sind im Bereich der Umspritzung 18 mit einer Dichtung 19 versehen. Auch die Energieleitungen 2 weisen jeweils eine Dichtung 20 auf. An die Signalleitungen 16 sind jeweils Signalkontaktelemente 22 angeschlossen. Aus darstellerischen Gründen verlaufend die Signalleitungen 16 jedoch nicht ganz zu den Signalkontaktelementen 22. An die Energieleitungen 2 sind jeweils Leistungskontaktelemente 21 angeschlossen. Die Kontaktelemente 21, 22 werden über Rastmittel 23, 23' im Kontaktträger 14 fixiert.

In der Nähe eines Leistungskontaktelements 21 ist ein Temperatursensor 26 angeordnet. Hierüber können Daten über den Ladevorgang gesammelt werden, welcher dann entsprechend über eine Steuereinheit in der Ladestation geregelt werden kann.

In Figur 8 ist die erfindungsgemäße Ladebuchse 1 steckseitig perspektivisch dargestellt. Im Steckbereich SB, den der Kontaktträger 14 ausbildet, ist an der Innenwand eine Vertiefung 24 mit einer Öffnung vorgesehen. Im Bereich der Öffnung ist außenseitig ein Wasserablauf 24 angeformt, der im Wesentlichen eine zylindrische Form mit einem trichterartigen Auslass aufweist. Hierüber wird das Wasser abgeführt, welches beispielsweise durch Regen beim Außenladen in die Ladebuchse 1 gerät.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Ladebuchse
- 2: Energieleitung
- 3: Metallische Leitung
- 4: Schirmgeflecht
- 5: Erste Isolierung
- 6: Zweite Isolierung
- 7: Kontaktbrille
- 8: Hülse
- 9: Ringfeder
- 10: Steg
- 11: Anschraubdorn
- 12: Ringkabelschuh
- 13: Gehäuse
- 14: Kontaktträger
- 15: Öffnung
- 16: Signalleitung
- 17: Kabelmanager
- 18: Umspritzung
- 19: Dichtung
- 20: Dichtung
- 21: Leistungskontaktelement
- 22: Signalkontaktelement
- 23: Rastmittel
- 24: Vertiefung
- 25: Wasserablauf
- 26: Temperatursensor
- 27: Hülse
- SB: Steckbereich

## Patentansprüche

1. Ladebuchse (1) für ein elektrisch betriebenes Fahrzeug,
wobei die Ladebuchse (1) zumindest zwei elektrische Energieleitungen (2) aufweist, wobei die Energieleitungen (2) jeweils aus einer zentralen metallischen Leitung (3), einer darauf umlaufenden ersten Isolierung (5), einem darauf angeordneten metallischen Schirmgeflecht (4) und einer darauf umlaufenden zweiten Isolierung (6) bestehen,
wobei die Ladebuchse (1) eine metallische Kontaktbrille (7) aufweist, die mit den Schirmgeflechten (4) der zumindest zwei Energieleitungen (2) elektrisch leitend verbunden ist,
charakterisiert dadurch, dass
die Ladebuchse (1) einen Anschraubdom (11) aufweist, der mit der Kontaktbrille (7) elektrisch leitend verbunden ist und an welchem ein elektrischer Schirmleiter anschließbar ist,
wobei auf das jeweilige Schirmgeflecht (4) der elektrischen Energieleitungen (2) eine metallische Hülse (8) elektrisch leitend befestigt ist,
wobei die Hülse (8) eine umlaufende Nut aufweist,
wobei in der umlaufenden Nut eine metallische Ringfeder (9) angeordnet ist und
wobei die elektrische Verbindung zwischen der Kontaktbrille (7) und dem jeweiligen Schirmgeflecht (4) über die metallische Hülse (8) und der darin angeordneten Ringfeder (9) realisiert ist.

2. Ladebuchse (1) nach Anspruch 1
**dadurch gekennzeichnet, dass**
die Hülse (8) auf das Schirmgeflecht (4) der Energieleitung (2) gecrimpt ist.

3. Ladebuchse (1) nach einem der vorstehenden Ansprüche
**dadurch gekennzeichnet, dass**
der Anschraubdom (11) einen Ringkabelschuh (12) zum Anschließen des Schirmleiters aufweist.

4. Ladebuchse (1) nach einem der vorstehenden Ansprüche
**dadurch gekennzeichnet, dass**
die Ladebuchse (1) ein Gehäuse (13) aufweist, welches die Kontaktbrille (7) umfasst.

5. Ladebuchse (1) nach vorstehendem Anspruch
**dadurch gekennzeichnet, dass**
das Gehäuse (13) zweiteilig ausgeführt ist.

6. Ladebuchse (1) nach einem der beiden vorstehenden Ansprüche
**dadurch gekennzeichnet, dass**
der Ringkabelschuh (12) des Anschraubdoms (11) aus dem Gehäuse (13) herausragt.

## Claims

1. Charging socket (1) for an electric-powered vehicle, wherein the charging socket (1) has at least two electrical energy lines (2), wherein the energy lines (2) each consist of a central metal line (3), a first insulation (5) running around on the latter, a metal shielding braid (4) arranged on the latter and a second insulation (6) running around on the latter,
wherein the charging socket (1) has a metal contact gland (7), which is connected in an electrically conducting manner to the shielding braids (4) of the at least two energy lines (2),
**characterized in that**
the charging socket (1) has a screw-on dome (11), which is connected in an electrically conducting manner to the contact gland (7) and to which an electrical shielding conductor can be connected,
wherein a metal sleeve (8) is fastened in an electrically conducting manner on the respective shielding braid (4) of the electrical energy lines (2),
wherein the sleeve (8) has a peripheral groove,
wherein a metal circlip (9) is arranged in the peripheral groove and
wherein the electrical connection between the contact gland (7) and the respective shielding braid (4) is realized by way of the metal sleeve (8) and the circlip (9) arranged therein.

2. Charging socket (1) according to Claim 1,
**characterized in that**
the sleeve (8) is crimped on the shielding braid (4) of the energy line (2).

3. Charging socket (1) according to one of the preceding claims,
**characterized in that**
the screw-on dome (11) has a ring-cable lug (12) for connecting the shielding conductor.

4. Charging socket (1) according to one of the preceding claims,
**characterized in that**
the charging socket (1) has a housing (13), which encloses the contact gland (7).

5. Charging socket (1) according to the preceding claim,
**characterized in that**
the housing (13) is of a two-part design.

6. Charging socket (1) according to one of the two precedingclaims,
**characterized in that**
the ring-cable lug (12) of the screw-on dome (11) protrudesout of the housing (13).

## Revendications

1. Prise de charge (1) pour un véhicule électrique,
la prise de charge (1) comportant au moins deux câbles d'énergie (2) électriques, les câbles d'énergie (2) étant constitués chacun d'un câble métallique central (3), d'une première isolation (5) s'étendant en périphérie sur celui-ci, d'un blindage tressé (4) métallique disposé dessus et d'une deuxième isolation (6) s'étendant en périphérie sur celui-ci,
la prise de charge (1) comportant des lunettes de contact (7) métalliques, qui sont raccordées de manière électriquement conductrice aux blindages tressés (4) des au moins deux câbles d'énergie (2),
**caractérisée en ce que**
la prise de charge (1) comporte un dôme à visser (11), qui est raccordé de manière électriquement conductrice aux lunettes de contact (7) et auquel un conducteur de blindage électrique peut être connecté,
un manchon (8) métallique étant fixé de manière électriquement conductrice sur le blindage tressé (4) respectif des câbles d'énergie (2) électriques,
le manchon (8) comportant une rainure périphérique,
un ressort annulaire (9) métallique étant disposé dans la rainure périphérique et
le raccordement électrique entre les lunettes de contact (7) et le blindage tressé (4) respectif étant réalisé par le manchon (8) métallique et le ressort annulaire (9) disposé dans celui-ci.

2. Prise de charge (1) selon la revendication 1,
**caractérisée en ce que**
le manchon (8) est serti sur le blindage tressé (4) du câble d'énergie (2).

3. Prise de charge (1) selon l'une des revendications précédentes,
**caractérisée en ce que**
le dôme à visser (11) comporte une cosse de câble annulaire (12) pour connecter le conducteur de blindage.

4. Prise de charge (1) selon l'une des revendications précédentes,
**caractérisée en ce que**
la prise de charge (1) comporte un boîtier (13), qui comprend les lunettes de contact (7).

5. Prise de charge (1) selon la revendication précédente,
**caractérisée en ce que**
le boîtier (13) est en deux parties.

6. Prise de câble (1) selon l'une des deux revendications précédentes,
**caractérisée en ce que**
la cosse de câble annulaire (12) du dôme à visser (11) dépasse du boîtier (13).
